# EUROPEAN PATENT APPLICATION

(11) **EP 4 089 903 A1**
(43) Date of publication of application: **16.11.2022**
(21) Application number: 22166043.4
(22) Date of filing: 31.03.2022
(51) Int. Cl.: H02M 1/14, H02M 7/155, H02M 7/17

(54) **POWER SYSTEM CIRCUIT APPARATUS**

(30) Priority: 14.05.2021 KR 20210062647
(71) Applicant: Korea Aerospace Research Institute, Daejeon 34133 (KR)
(72) Inventor: Park, Jeong Eon, 34133 Daejeon (KR); Lee, Byoung Hee, 16941 Yongin-si (KR)
(74) Representative: RGTH

(57) **Abstract**

A power system circuit apparatus is provided, which includes a first transformer having a Y-Y connection structure and configured to receive and transform three-phase AC power and output the transformed result, a first controlled rectifier configured to rectify an output voltage of the first transformer and output the rectified result; a second transformer having a Y-delta connection structure and configured to receive and transform the three-phase AC power and output the transformed result; a second controlled rectifier configured to rectify an output voltage of the second transformer and output the rectified result; and an output unit configured to add the output of the first controlled rectifier and the output of the second controlled rectifier and output a resultant sum. Accordingly, there is an effect of reducing the output current ripple and thus reducing the loss compared to the related method.

## Description

### CROSS-REFERENCE TO RELATED APPLICATION

This application claims priority to Korean Patent Application No. 10-2021-0062647, filed in the Korean Intellectual Property Office on May 14, 2021, the entire contents of which are hereby incorporated by reference.

### Technical field

The present disclosure relates to a power system circuit apparatus, and more particularly, to a multi-phase power system circuit apparatus using a transformer coupling.

### Background art

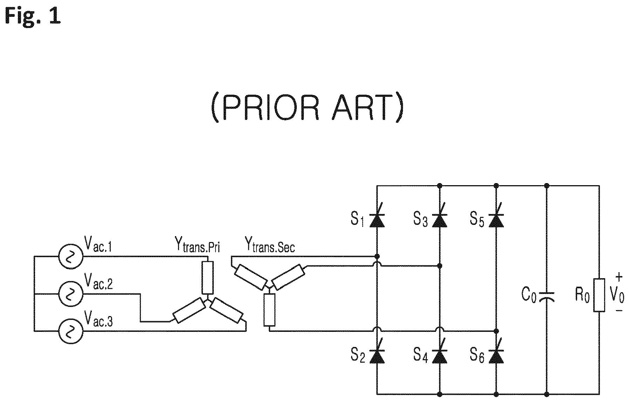

A power system used in a related electroosmotic dehydrator and the like has a configuration as illustrated in FIG. 1.

FIG. 1 is a diagram illustrating a circuit configuration of a related power system.

The related power system as illustrated in FIG. 1 involves receiving a three-phase power input, insulating it through a three-phase transformer, and then rectifying a desired output voltage through a secondary-side controlled rectifier, SCR. It has a very simple circuit structure and thus has a low possibility of failure, and since it is the circuit structure that has been in use for long, it has excellent empirical verification. However, it also involves high output current ripple and subsequently increased loss, resulting in the power conversion efficiency as low as 70 to 80%. In addition, there is a disadvantage in that the volume and weight of the transformer are increased.

### SUMMARY

The technical problem to be solved by the present disclosure is to provide a power system circuit apparatus capable of improving power conversion efficiency by reducing output current ripple and thus reducing loss compared to the related method.

### Technical Solution

In order to solve the technical problems mentioned above, a power system circuit apparatus is provided, which may include a first transformer having a Y-Y connection structure configured to receive and transform three-phase AC power and outputs a transformed result, a first controlled rectifier configured to rectify an output voltage of the first transformer and output the rectified result, a second transformer having a Y-delta connection structure and configured to receive and transform the three-phase AC power and output the transformed result, a second controlled rectifier configured to rectify an output voltage of the second transformer and output the rectified result, and an output unit configured to add the output of the first controlled rectifier and the output of the second controlled rectifier and output a resultant sum.

The power system circuit apparatus may further include a control unit configured to output a first gate signal for driving the first controlled rectifier and a second gate signal for driving the second controlled rectifier.

The second gate signal may be phase shifted with respect to the first gate signal by a predetermined amount.

The first controlled rectifier may be a three-phase full-bridge circuit including first to sixth silicon-controlled rectifier (SCR) thyristors (S₁, S₂, S₃, S₄, S₅, S₆).

The second controlled rectifier may include seventh to twelfth silicon-controlled rectifier (SCR) thyristors (S₂₁, S₂₂, S₂₃, S₂₄, S₂₅, S₂₆).

The second gate signal may be shifted with respect to the first gate signal by π/6.

According to embodiments, there is an effect of reducing the output current ripple and thus reducing the loss compared to the related method. In addition, since the current loss is determined by I(RMS)^2^{∗}R, the reduction of the output current ripple leads to a reduction in the RMS value of the output current, thereby obtaining an effect of improving power conversion efficiency by the reduction in loss. In addition, since the embodiment is applicable by adding new features while using the power stage of the existing power system as it is, there is an advantage that it is possible to utilize the existing parts and devices, and it is thus relatively easy to apply to the method used in the existing industry.

### BRIEF DESCRIPTION OF THE DRAWING

The above and other objects, features and advantages of the present disclosure will become more apparent to those of ordinary skill in the art by describing in detail exemplary embodiments thereof with reference to the accompanying drawings, in which:
FIG. 1 is a diagram illustrating a circuit configuration of a related power system;
FIG. 2 is a circuit diagram illustrating a power system circuit apparatus according to an embodiment;
FIG. 3 is a diagram illustrating a secondary-side SCR control gate signal of the related power system circuit of FIG. 1;
FIG. 4 is a diagram illustrating a secondary-side SCR control gate signal of the power system circuit of FIG. 2 according to an embodiment; and
FIG. 5 shows ripple waveforms of an output current obtained by simulating a power system circuit according to an embodiment and related art.

### DETAILED DESCRIPTION

Hereinafter, preferred embodiments of the present disclosure will be described in detail with reference to the accompanying drawings so that those with ordinary knowledge in the art can easily achieve the present disclosure. However, the embodiments are described herein only for the purpose of explaining the invention in more detail, and it will be apparent to those skilled in the art that the scope of the present disclosure is not limited thereto.

The configuration of the disclosure for clarifying the solution to the technical problem of the present disclosure will be described in detail with reference to the accompanying drawings based on certain embodiments of the present disclosure, but in designating the components in the drawings by the reference numerals, the same components are designated by the same reference numerals even when they are on different drawings, and it is to be noted that, in the description of the drawings, components of other drawings may be cited as necessary. In addition, while explaining the operating principle of the preferred embodiment of the present disclosure in detail, when it is determined that detailed descriptions of well-known functions or configurations related to the present disclosure and other matters may unnecessarily make the subject matter of the present disclosure rather unclear, a detailed description thereof will be omitted.

In addition, throughout the description, when a portion is stated as being "connected" to another portion, it is intended to include not only an example where the portions are "directly connected", but also an example where the portions are "indirectly connected" with another element disposed therebetween. In the description, a singular expression also includes a plural expression unless specifically stated otherwise in the context. As used herein, "comprise" or "comprising" does not foreclose the presence or addition of one or more other elements, steps, operations, or devices in addition to the recited elements, steps, operations, or devices.

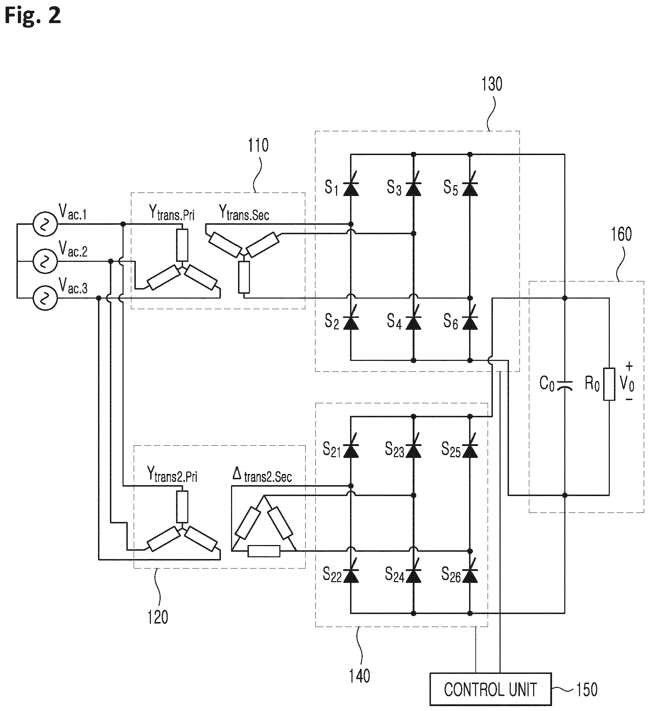

FIG. 2 is a circuit diagram illustrating a power system circuit apparatus according to an embodiment.

Referring to FIG. 2, the power system circuit apparatus according to an embodiment may include a first transformer 110, a second transformer 120, a first controlled rectifier 130, a second controlled rectifier 140, a control unit 150, and an output unit 160.

The first transformer 110 may receive and transform three-phase AC power and output the transformed result, and may have a Y-Y connection structure.

The second transformer 120 may receive and transform three-phase AC power and output the transformed result, and may have a Y-delta connection structure.

The first controlled rectifier 130 may rectify the output voltage of the first transformer 110 and output the rectified result.

The first controlled rectifier 130 may be configured as a three-phase full-bridge circuit including first to sixth silicon-controlled rectifier (SCR) thyristors (S₁, S₂, S₃, S₄, S₅, S₆).

The second controlled rectifier 140 may rectify the output voltage of the second transformer 120 and output the rectified result.

The second controlled rectifier 140 may be configured as a three-phase full-bridge circuit including seventh to twelfth SCR thyristors (S₂₁, S₂₂, S₂₃, S₂₄, S₂₅, S₂₆).

The control unit 150 may output a first gate signal for driving the first controlled rectifier 130 and a second gate signal for driving the second controlled rectifier 140.

The control unit 150 may control the second gate signal by shifting a specific phase with respect to the first gate signal by a predetermined amount.

The output unit 160 may add the output of the first controlled rectifier 130 and the output of the second controlled rectifier 140 and output the resultant sum.

As described above, the power system circuit according to an embodiment has a structure such that incoming three-phase power is applied through two ports (that is, Y-Y connection transformer 110 and Y-Δ connection transformer 120), and then integrated back to one output port through the secondary-side SCR control stages (that is, the first controlled rectifier 130 and the second controlled rectifier 140).

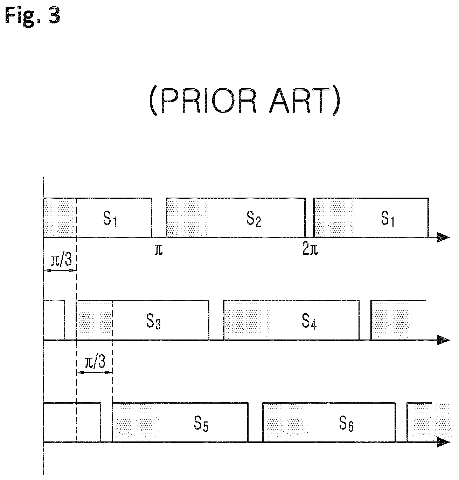

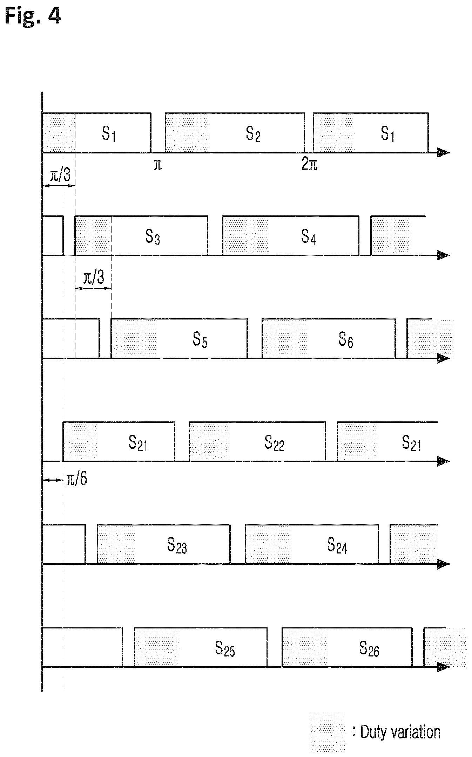

FIG. 3 is a diagram illustrating a secondary-side SCR control gate signal of the related power system circuit of FIG. 1, and FIG. 4 is a diagram illustrating a secondary-side SCR control gate signal of the power system circuit of FIG. 2 according to an embodiment.

Referring to FIGS. 3 and 4, the first gate signal may be applied to the first controlled rectifier 130 as in the case of the SCR control gate signal of the related power system, and the second gate signal having a phase shifted by θ from that of the first gate signal may be applied to the second controlled rectifier 140. FIG. 4 illustrates an example in which θ is π/6. The θ value may be set differently depending on the embodiment.

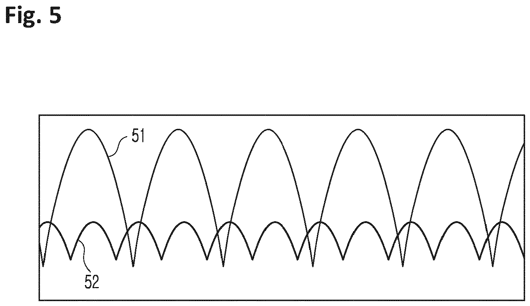

FIG. 5 shows ripple waveforms of an output current obtained by simulating a power system circuit according to an embodiment and related art.

Referring to FIG. 5, graph 52 illustrates a ripple waveform of an output current obtained by simulating the power system circuit illustrated in FIG. 2 according to an embodiment, and graph 51 illustrates a ripple waveform of an output current obtained by simulating the related power system circuit according to FIG. 1.

It was confirmed that according to the power system circuit method according to the embodiment, the output current ripple can be reduced by about 70% compared to the related method (According to the input and output specifications and detailed design method, the reduction rate of the ripple of the output current is likely to be further improved).

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A power system circuit apparatus comprising:
a first transformer having a Y-Y connection structure and configured to receive and transform three-phase AC power and output the transformed result;
a first controlled rectifier configured to rectify an output voltage of the first transformer and output the rectified result;
a second transformer having a Y-delta connection structure and configured to receive and transform the three-phase AC power and output the transformed result;
a second controlled rectifier configured to rectify an output voltage of the second transformer and output the rectified result; and
an output unit configured to add the output of the first controlled rectifier and the output of the second controlled rectifier and output a resultant sum.

2. The power system circuit apparatus according to claim 1, further comprising a control unit configured to output a first gate signal for driving the first controlled rectifier and a second gate signal for driving the second controlled rectifier.

3. The power system circuit apparatus according to claim 2, wherein the second gate signal is phase shifted with respect to the first gate signal by a predetermined amount.

4. The power system circuit apparatus according to claim 2, wherein the first controlled rectifier is a three-phase full-bridge circuit including first to sixth silicon-controlled rectifiers (SCR) thyristors (S₁, S₂, S₃, S₄, S₅, S₆), and
the second controlled rectifier is a three-phase full-bridge circuit including seventh to twelfth silicon-controlled rectifier (SCR) thyristors (S₂₁, S₂₂, S₂₃, S₂₄, S₂₆, S₂₆).

5. The power system circuit apparatus according to claim 4, wherein the second gate signal is phase shifted with respect to the first gate signal by π/6.
